# EUROPEAN PATENT APPLICATION

(11) **EP 4 290 293 A1**
(43) Date of publication of application: **13.12.2023**
(21) Application number: 22748834.3
(22) Date of filing: 13.01.2022
(51) Int. Cl.: G02B 27/01

(54) **SHORT-FOCUS NEAR-EYE DISPLAY SYSTEM**

(30) Priority: 04.02.2021 CN 202110154039; 01.07.2021 CN 202110746124
(71) Applicant: Guanggan (Shanghai) Technology Co., Ltd., Shanghai 201900 (CN)
(72) Inventor: YANG, Jianming, Shenzhen, Guangdong 518000 (CN)
(74) Representative: Murgitroyd & Company
(86) International application number: PCT/CN2022/071795
(87) International publication number: WO 2022/166555

(57) **Abstract**

A short-focus near-eye display system is provided, which relates to the field of near-eye display technologies, and solves the problems of a large field of view, a large exit pupil diameter, and contradiction between energy efficiency and volumes in an existing AR technology. The system includes a microdisplay, a convex partial reflector or a planar partial reflector, and a concave partial reflector. The microdisplay is located between the convex partial reflector and the concave partial reflector or the microdisplay is located between the planar partial reflector and the concave partial reflector, and emits light towards a pupil position. The convex partial reflector or the planar partial reflector is close to the pupil position, and the concave partial reflector is away from the pupil position. The microdisplay is a transparent display or a rotating linear display. Through two reflections, a size of the microdisplay is optically increased, so that manufacturing difficulty of the microdisplay is reduced, precision required for the rotation is reduced, and a higher resolution is supported. By use of a turning effect of a plane mirror, a thickness of glasses can be reduced to a maximum extent, thereby achieving thinning.

## Description

### CROSS-REFERENCE TO RELATED APPLICATIONS

This application claims priorities to Chinese Patent Application No. 202110154039.9 filed on Feb. 4, 2021 and entitled "SHORT-FOCUS NEAR-EYE DISPLAY SYSTEM", and Chinese Patent Application No. 202110746124.4 filed on Jul. 1, 2021 and entitled "SHORT-FOCUS NEAR-EYE DISPLAY SYSTEM". The disclosures of the aforementioned applications are hereby incorporated by reference in their entireties.

### TECHNICAL FIELD

The present disclosure relates to the field of near-eye display technologies, and in particular, to a short-focus near-eye display system.

### BACKGROUND

Augmented reality (AR) is known as a third-generation computing platform, which can magnify an image of a microdisplay through small glasses to provide a user with a super-large 3D image, and at the same time, a displayed image can be integrated with a real environment, which has a very wide range of applications in daily life and industrial fields.

At present, there are various AR technologies, including free-form-surface prisms, off-axis catadioptric structures, waveguide glasses, and the like. Due to various constraints, a large field of view, a large exit pupil diameter, and contradiction between energy efficiency and volumes cannot be solved. The present disclosure solves the above problems by using spherical symmetry. Based on the previously applied patent technology (Patent Number: 202020742439), in the present disclosure, by use of two reflections, a thickness of glasses is reduced, an exit pupil distance is increased, and breadth of application is further improved. At the same time, in the present disclosure, by use of two reflections, a size of the microdisplay is increased, manufacturing difficulty of the microdisplay and precision required for the rotation are reduced, and a higher resolution is supported. By use of a turning effect of a plane mirror, a thickness of glasses can be reduced to a maximum extent, thereby achieving thinning. In the present disclosure, the display emits light towards a human-eye side, which also reduces leakage of information.

### SUMMARY

The present disclosure provides a short-focus near-eye display system to solve the problems of the large field of view, the large exit pupil diameter, and the contradiction between energy efficiency and volumes in the existing AR technology.

A short-focus near-eye display system is provided, which includes a microdisplay, a convex partial reflector or a planar partial reflector, and a concave partial reflector. The microdisplay is located between the convex partial reflector and the concave partial reflector or the microdisplay is located between the planar partial reflector and the concave partial reflector. The convex partial reflector or the planar partial reflector is closer to a pupil position, and the concave partial reflector is farther from the pupil position. The microdisplay is configured as a transparent display or a rotating linear display and emits light towards the pupil position. The emitted light is first reflected by the convex partial reflector or the planar partial reflector, the reflected light is reflected by the concave partial reflector, and the reflected light passes through the convex partial reflector or the planar partial reflector and reaches the pupil position to realize functions of zooming in and zooming out. Surface types and relative positions of the convex partial reflector, the concave partial reflector, and the microdisplay are configured to suit a degree of myopia of a user, and the convex partial reflector and the concave partial reflector are configured to transmit part of the light, so that ambient light reaches a human eye clearly at the same time.

A short-focus near-eye display optical system is provided, which includes a microdisplay, a convex partial reflector, and a concave partial reflector. The microdisplay is configured as a rotating linear display or a transparent display and emit light towards a pupil position. When the microdisplay is configured as the rotating linear display, a transparent protective shell is configured on an outer side thereof. The convex partial reflector and the concave partial reflector are sequentially configured between the pupil position and the microdisplay. The light emitted by the microdisplay passes through the concave partial reflector and is reflected by the convex partial reflector, and the light is reflected by the concave partial reflector, passes through the convex partial reflector, and then reaches the pupil position, to achieve an effect of zooming in and zooming out an image of the microdisplay. Surface types and relative positions of the convex partial reflector, the concave partial reflector, and the microdisplay are configured to suit a degree of myopia of a user, and the convex partial reflector and the concave partial reflector are configured to transmit part of the light, so that ambient light reaches a human eye clearly at the same time.

The present disclosure has the following beneficial effects. The present disclosure provides a short-focus near-eye display system, which can reduce an overall thickness of the glasses and increase the exit pupil diameter, making the user's wearing more comfortable and more beautiful.

Through two reflections, a size of the microdisplay is optically increased, so that manufacturing difficulty of the microdisplay is reduced, the precision required for the rotation is reduced, and a higher resolution is supported.

By use of a turning effect of a plane mirror, a thickness of glasses can be reduced to a maximum extent, thereby achieving thinning.

In the present disclosure, a position of the microdisplay can be moved back and forth to realize a zoom function. One surface curvature of the reflector can be adjusted to suit a wearer's degree.

Finally, in the present disclosure, the display emits light towards the human eye, which reduces leakage of displayed information.

### BRIEF DESCRIPTION OF THE DRAWINGS

FIG 1 is an optical path diagram of one surface reflection manner of a partial reflector of a short-focus near-eye display system according to the present disclosure;
FIG 2 is an optical path diagram of another surface reflection manner of a partial reflector of another short-focus near-eye display system different from that in FIG 1;
FIG 3 is an optical path diagram of a flat display used in a short-focus near-eye display system according to the present disclosure;
FIG 4 is an optical path diagram of a short-focus near-eye display system using a planar partial reflector according to the present disclosure;
FIG 5 is a structural diagram of a transparent display;
FIG 6 is a schematic assembly diagram of a short-focus near-eye display system using a transparent display according to the present disclosure;
FIG 7 is a basic structural diagram of a microdisplay which is a linear display;
FIG 8 is a schematic diagram of a linear display formed by splicing a plurality of rectilinear displays;
FIG 9 is a schematic diagram of an assembly having a linear display and using magnetic confinement;
FIG 10 is a schematic diagram of an assembly having a linear display and using a sliding bearing;
FIG 11 is a schematic diagram of an assembly having a rectilinear display and employing magnetic confinement;
FIG 12 is a schematic diagram of an assembly having a planar partial reflector and using a sliding bearing;
FIG 13 shows an arrangement of permanent magnets on a rotating ring;
FIG 14 shows an arrangement of permanent magnets in a Halbach array on a rotating ring;
FIG 15 is a schematic diagram of the short-focus near-eye display system in FIG 2, in which a phase retardation wave plate and a polarization device are employed;
FIG 16 is a schematic diagram of the short-focus near-eye display system in FIG 4, in which a phase retardation wave plate and a polarization device are employed;
FIG 17 is a schematic diagram of polarization changes in an optical path after a phase retardation wave plate is added to the short-focus near-eye display system in FIG 1;
FIG 18 is a schematic diagram of polarization changes in another optical path after the phase retardation wave plate is added to the short-focus near-eye display system in FIG 1;
FIG 19 is a schematic diagram of the short-focus near-eye display system in FIG 1, in which a front dynamic light-shielding device is added;
FIG 20 is an optical path diagram of a third-type microdisplay fitting an outer surface of a concave partial reflector according to the present disclosure;
FIG 21 is an optical path diagram of the microdisplay spaced from the outer surface of the concave partial reflector;
FIG 22 is an optical path diagram of the microdisplay which is a flat display placed on an outer side;
FIG 23 is a schematic diagram of the short-focus near-eye display system in FIG 20, in which a phase retardation wave plate and a polarization device are added; and
FIG 24 is a schematic diagram of a stripped reflector and a microdisplay which rotate simultaneously.

In the drawings, 1: pupil position, 2: convex partial reflector, 2-1: convex partial reflector inner side surface, 2-2: convex partial reflector outer side surface, 2-3: convex partial reflector extension end, 3: concave partial reflector, 3-1: concave partial reflector inner side surface, 3-2: concave partial reflector outer side surface, 4: microdisplay, 4a: transparent display, 4a-1: transparent protective layer, 4a-2: transparent light-emitting pixel layer, 4a-3: transparent driving layer, 4a-4: dynamic light-shielding layer, 4a-5: transparent display outer bracket, 4b: linear display, 4b-1: light-emitting pixel, 4b-2: driving and arc-shaped bracket, 4b-3: linear display unit, 4b-4: non-display region, 4b-5: display overlapping region, 4b-6: rotating ring, 4b-6-1: rotating ring S-pole outer permanent magnet, 4b-6-2: rotating ring N-pole outer permanent magnet, 4b-6-3: rotating ring outward pointing permanent magnet, 4b-6-4: rotating ring inward pointing permanent magnet, 4b-6-5: rotating ring clockwise pointing permanent magnet, 4b-6-6: rotating ring counterclockwise pointing permanent magnet, 4c: flat microdisplay, 4c-1: flat microdisplay extension end, 4c-2: flat microdisplay rotating ring, 4d: outer microdisplay, 4d-1: outer microdisplay rotating ring, 4f: outer flat microdisplay, 5: phase retardation wave plate, 5-1: inner phase retardation wave plate, 5-2: outer phase retardation wave plate, 6: polarizer, 7: light, 7a-1: first p-type linearly polarized light, 7a-2: second p-type linearly polarized light, 7a-3: first circularly or elliptically polarized light, 7a-4: second circularly or elliptically polarized light, 7a-5: first s-type linearly polarized light, 7b-1: third circularly or elliptically polarized light, 7b-2: third p-type linearly polarized light, 7b-3: fourth circularly or elliptically polarized light, 7b-4: fifth circularly or elliptically polarized light, 7b-5: second s-type linearly polarized light, 8: outer polarization element, 9: inner polarization element, 10: inner magnetic ring, 11: driving and power supply coil or PCB, 12: outer magnetic ring, 13: magnetic conductive ring, 14: wear-resisting ring, 15: lubricating gap, 16: sliding ring, 17: planar partial reflector, 17-1: planar partial reflector outer side, 17-2: planar partial reflector inner side, 18: thin shaft, 19: bound magnetic ring, 20: dynamic light-shielding device, 20-1: front dynamic light-shielding device black-state pixels, 21: rotating bracket, 22: central gap, 23: central permanent magnet, 24: stray light, 25: striped concave reflector, 25-1: stripped concave reflector front surface, 25-2: stripped concave reflector rear surface, 26: outer transparent protective shell, 27: display screen stand.

### DETAILED DESCRIPTION OF THE EMBODIMENTS

In the present disclosure, terms such as "first" and "second" are used for descriptive purposes only, and cannot be understood as indicating or implying relative importance or implicitly indicating the number and sequence of indicated technical features. Thus, the feature defined with "first" and "second" may explicitly or implicitly include one or more of the feature. In the description of the present disclosure, "a plurality of" means at least two, such as two or three, unless specifically specified otherwise.

In the present disclosure, terms "comprise" and "have" and any variations thereof are intended to cover non-exclusive inclusion. For example, a system, product or device including a series of units is not necessarily limited to those units explicitly listed, but may include other units that are not clearly listed or are inherent to the product or device.

In the present disclosure, unless specifically stated and limited, the terms "mount," "join," "connect", and "fix" should be understood in a broad sense, such as, a fixed connection, a detachable connection, or an integral connection; a mechanical connection, an electrical connection, or mutual communication; a direct connection, an indirect connection through an intermediate medium, an internal connection of two elements, or interaction between two elements. For those of ordinary skill in the art, the specific meanings of the foregoing terms in the present disclosure can be understood on a case-by-case basis.

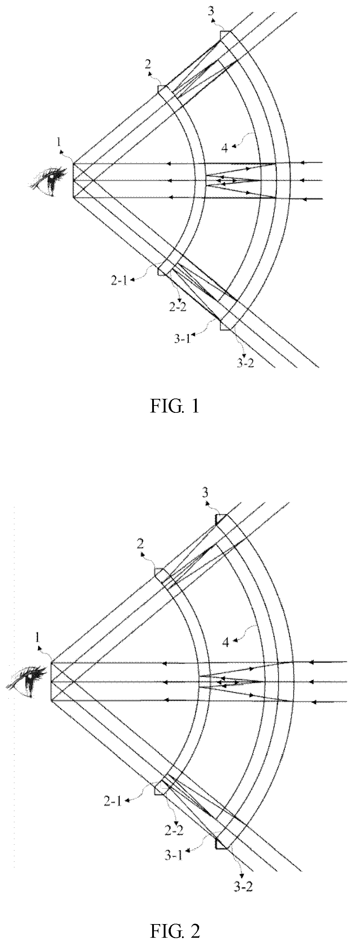

Specific Implementation 1: This implementation is described with reference to FIG 1 to FIG 10. As shown in FIG 1, a short-focus near-eye display system mainly includes a microdisplay 4, a convex partial reflector 2, and a concave partial reflector 3. The microdisplay 4 is between the convex partial reflector 2 and the concave partial reflector 3 and emits light towards an eye. The microdisplay 4 may be a transparent display 4a or a rotating linear display 4b. the partial reflector closer to the eye is the convex reflector, and the partial reflector farther from the eye is the concave reflector. The light is emitted from a concave side of the microdisplay 4, and is reflected by one surface of the convex partial reflector 2, i.e., an inner side surface 2-1 or an outer side surface 2-2 of the convex partial reflector. The light then passes through the microdisplay 4 and is reflected by the concave partial reflector 3, and passes through the microdisplay again. Since the convex partial reflector 2 can transmit light at the same time, the reflected light passes through the convex partial reflector 2 and then reaches a pupil position 1 for observation by a human eye. The light emitted by the microdisplay 4 is reflected twice, achieving an effect of zooming in and zooming out. Preferably, in order to achieve uniformity of clarity of a displayed image, the convex partial reflector 2, the concave partial reflector 3, and the microdisplay 4 are distributed on concentric spherical surfaces, and the spherical center is at the center of the pupil position 1. Since the human eye has a zoom adjustment function, a certain degree of movement of each component or deformation of a surface of each component is allowed. An additional function of this movement is to adapt to a degree of myopia and realize dynamic zoom. As an example, a set of optical design parameters is listed in the following table.

| Surface | Radius of curvature (mm) | Thickness (mm) | Material |
|---|---|---|---|
| Virtual image | OC) | -2000 | - |
| Pupil exit position | OC) | 18 | Air |
| 2-1 sphere | -18 | 1.58 | PMMA |
| 2-2 sphere | -19.58 | 10.42 | Coated with reflective film, air |
| 3-1 sphere | -30 | 2 | Coated with reflective film, PMMA |
| 3-2 sphere | -32 | -4.5 | Air |
| 4 sphere | -27.385 | - | - |

As shown in FIG 2, if one surface of the convex partial reflector 2 is coated with a reflective film to participate in generation of a virtual image, the curvature of the other surface may be changed as a surface for myopia correction to suit the degree of the user. Two surfaces of the concave reflector may be treated in a same manner to adjust the degree.

One surface of the concave partial reflector 3 is coated with a partial reflective film layer, which is generally referred to as a reflective filter film. The film layer is designed according to a light-emitting wavelength of the microdisplay 4. For example, the partial reflective film layer has a high reflectivity for a light-emitting central wavelength of the microdisplay 4, for example, more than 90%, and has a high transmittance for wavelengths other than the light-emitting central wavelength, for example, 90%. Such a design can increase brightness of ambient light. The reflective filter film may be a dielectric film layer, a dielectric metal composite film layer, a holographic film layer, or a microstructure film layer.

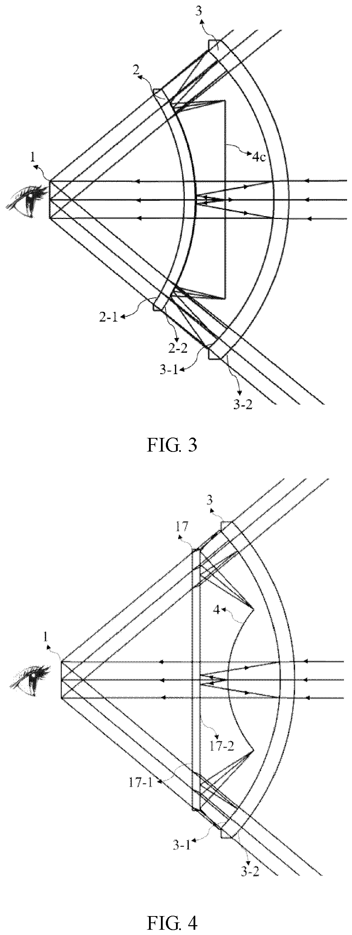

As shown in FIG 3, the microdisplay 4 is a flat microdisplay. The flat microdisplay 4c is between the convex partial reflector 2 and the concave partial reflector 3, and emits light towards the eye. The flat microdisplay 4c may be a flat transparent display or a rotating rectilinear display. Due to a flat shape thereof, it is easy to be manufactured under an existing technical condition. The partial reflector closer to the eye is the convex reflector, and the partial reflector farther from the eye is the concave reflector. The light is emitted by the flat microdisplay 4c to the convex partial reflector 2, and is reflected by one surface of the convex partial reflector 2, i.e., the inner side surface 2-1 or the outer side surface 2-2 of the convex partial reflector. The light then passes through the flat microdisplay 4c, and is reflected by the concave partial reflector 3. Since the convex partial reflector 2 can transmit light at the same time, the reflected light passes through the convex partial reflector 2 and then reaches the pupil position 1 for observation by the human eye. The light emitted by the flat microdisplay 4c is reflected twice, thereby achieving an effect of zooming in and zooming out. Due to the use of the flat microdisplay 4c, an overall structure of an optical path does not have spherical symmetry. In order to achieve asymmetric correction, preferably, at least one of the convex partial reflector 2 and the concave partial reflector 3 is aspherical. Since the human eye has a zoom adjustment function, a certain degree of movement of each component or deformation of a surface shape of each component is allowed. An additional function of this movement is to adapt to a degree of myopia and realize dynamic zoom. As an example, design parameters of even-order aspheric surfaces used for two optical surfaces are listed in the following table.

| Surface | Radius of curvature (mm) | Thickness (mm) | Material | Aspheric coefficient r² | Aspheric coefficient r⁴ |
|---|---|---|---|---|---|
| Virtual image | ∞ | -2000 | - | - | - |
| Pupil exit position | ∞ | 21 | Air | - | - |
| 2-1 even-order aspheric surface | -23.36 | 1 | PMMA | -3.0213E-4 | 3.415E-6 |
| 2-2 even-order aspheric surface | -23.36 | 8 | Coated reflective film, air | -3.0213E-4 | 3.415E-6 |
| 3-1 even-order aspheric surface | -24.725 | 0.8 | Coated reflective film, PMMA | -9.336E-5 | 9.046E-7 |
| 3-2 even-order aspheric surface | -25.525 | -4.5 | Air | -9.336E-5 | 9.046E-7 |
| 4 | -27.385 | - | - | - | - |

If one surface of the convex partial reflector 2 is coated with a reflective film to participate in generation of a virtual image, the curvature of the other surface may be changed as a surface for myopia correction to suit the degree of the user. Two surfaces of the concave reflector may be treated in a same manner to adjust the degree.

One surface of the concave partial reflector 3 is coated with a partial reflective film layer, commonly referred to as a reflective filter film. The film layer is designed according to a light-emitting wavelength of the microdisplay 4 and has a high reflectivity for a light-emitting central wavelength of the microdisplay 4, for example, more than 90%, and has a high transmittance for wavelengths other than the light-emitting central wavelength, for example, 90%. Such a design can increase brightness of ambient light. The reflective filter film may be a dielectric film layer, a dielectric metal composite film layer, a holographic film layer, or a microstructure film layer.

As shown in FIG 4, it is composed of a microdisplay 4, a planar partial reflector 17, and a concave partial reflector 3. The microdisplay 4 is between the planar partial reflector 17 and the concave partial reflector 3 and emits light towards an eye. The microdisplay 4 may be a transparent display 4a or a rotating linear display 4b. The partial reflectors closer to the eye is planar reflector, and the partial reflector farther from the eye is the concave reflector. The light is emitted from a convex side of the microdisplay 4, is reflected by one surface of the planar partial reflector 17, i.e., an inner side surface 17-1 or an outer side surface 17-2 of the planar partial reflector, and partially passes through a display part of the microdisplay 4, partially passes through an edge part of the microdisplay 4. The light is then reflected by the concave partial reflector 3, and passes through the microdisplay again. Since the planar partial reflector 17 can transmit light at the same time, the reflected light passes through the planar partial reflector 17 and then reaches the pupil position 1 for observation by the human eye. After the light emitted by the microdisplay 4 is reflected by the concave partial reflector 3, an effect of zooming in and zooming out is achieved.

In this implementation, in order to achieve uniformity of clarity of a displayed image, the concave partial reflector 3 is a spherical surface, and a spherical center thereof is coincident with the center of the pupil position 1. The microdisplay 4 is also distributed on a spherical surface. After expansion by the planar partial reflector 17, a spherical center is also located at the center of the pupil position 1. Since the human eye has a zoom adjustment function, a certain degree of movement of each component or deformation of a surface shape of each component is allowed. An additional function of this movement is to adapt to a degree of myopia and realize dynamic zoom. As an example, a set of optical design parameter is listed in the following table.

| Surface | Radius of curvature (mm) | Thickness (mm) | Material |
|---|---|---|---|
| Virtual image | OC) | -2000 | - |
| Pupil exit position | OC) | 18 | Air |
| 17-1 sphere | OC) | 1 | PMMA |
| 17-2 sphere | OC) | 11 | Coated reflective film, air |
| 3-1 sphere | -30 | 2 | Coated reflective film, PMMA |
| 3-2 sphere | -32 | -9.15 | Air |
| 4 sphere | 15 | - | - |

If one surface of the planar partial reflector 17 is coated with a reflective film to participate in generation of a virtual image, the curvature of the other surface may be changed as a surface for myopia correction to suit the degree of the user. Two surfaces of the concave reflector may be treated in a same manner to adjust the degree.

One surface of the concave partial reflector 3 is coated with a partial reflective film layer, commonly referred to as a reflective filter film. The film layer is designed according to a light-emitting wavelength of the microdisplay 4 and has a high reflectivity for a light-emitting central wavelength of the microdisplay 4, for example, more than 90%, and has a high transmittance for wavelengths other than the light-emitting central wavelength, for example, 90%. Such a design can increase brightness of ambient light. The reflective filter film may be a dielectric film layer, a dielectric metal composite film layer, a holographic film layer, and a microstructure film layer.

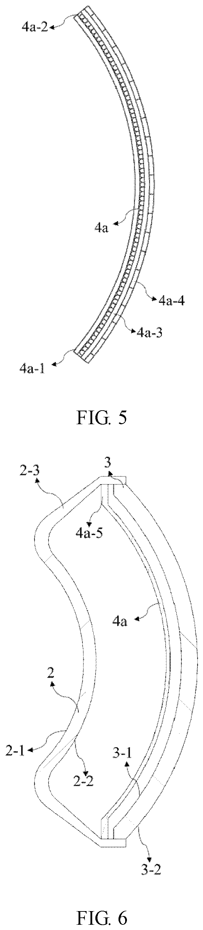

As shown in FIG 5, when the microdisplay 4 is the transparent display 4a, a structure thereof is generally composed of a transparent protective layer 4a-1, a transparent light-emitting pixel layer 4a-2, and a transparent driving layer 4a-3. In order to prevent stray light, a dynamic light-shielding layer 4a-4 may be added. The transparent protective layer 4a-1 is generally made of transparent glass or resin. The transparent light-emitting pixel layer may be composed of an OLED, a Micro-LED, or the like, or may be realized by liquid crystal control. The transparent driving layer 4a-3 is composed of driving units in an array made of transparent conductive materials such as ITO, carbon nanotubes, and graphene. There are also a plurality of pixels on the dynamic light-shielding layer 4a-4, and grayscale adjustment is realized by means of dye-doped liquid crystal, electrowetting, or the like, for blocking light emitted by light-emitting pixels facing away from the human eye. The pixels on the dynamic light-shielding layer 4a-4 may be much larger than the light-emitting pixels, and may be for example, circular pixels with a diameter ranging from 0.5 mm to 2 mm or stripped pixels with a diameter of 0.5 mm*20 mm. A purpose thereof is to block light emission. Therefore, as long as a pixel size is smaller than a pupil of the human eye in one direction, the light can be guaranteed to enter the human eye. Of course, it is best to keep the pixel size below 0.5 mm so that more light can enter the human eye. When the flat microdisplay 4c is a transparent display, the structure is the same as that of the transparent display 4a, and a difference is that the shape of the flat microdisplay 4c is a planar one. As shown in FIG 6, a transparent display outer bracket 4a-5 is arranged at an edge of the transparent display, and the assembly with the glass frame is facilitated. At the same time, an edge of the convex partial reflector 2 is provided with a convex partial reflector extension end 2-3, the extension end may form a closed space with the concave partial reflector 3 and the glass frame, which has an effect of preventing dust. At the same time, the closed space may be filled with nitrogen or inert gas or vacuumized, to prevent oxidation of internal components and prolong the service life.

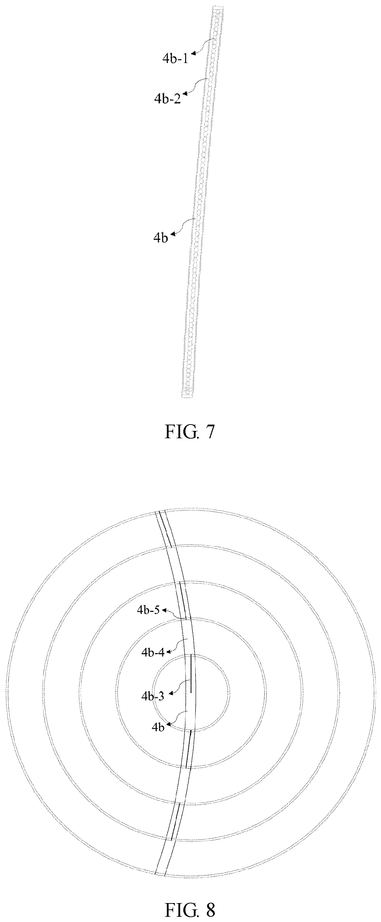

As shown in FIG 7, FIG 7 is a schematic diagram of a linear display, in which one or more columns of light-emitting pixels 4b-1 are distributed on a driving and arc-shaped bracket 4b-2. A total width cannot exceed a pupil diameter of the human eye, and the thinner the better. As shown in FIG 8, in consideration of difficulty of arc-shaped machining, a plurality of rectilinear display units 4b-3 may be spliced to form an integral linear display 4b. FIG 8 shows one splicing manner, in which a complete image can be scanned through cooperation between an upper half and a lower half. This has an advantage that there is a non-display region 4b-4 between the rectilinear display units 4b-3, and a driving circuit may be arranged in the non-display region 4b-4. Generally, a display overlapping region 4b-5 is reserved at a position where the rectilinear display units 4b-3 in two adjacent circles are spliced, to compensate for an assembly error. When the flat microdisplay 4c is a rotating linear display, the structure is the same as that of the linear display 4b, and a difference is that the shape of the flat microdisplay 4c is rectilinear. Therefore, the segmented arrangement manner shown in FIG 8 is unnecessary.

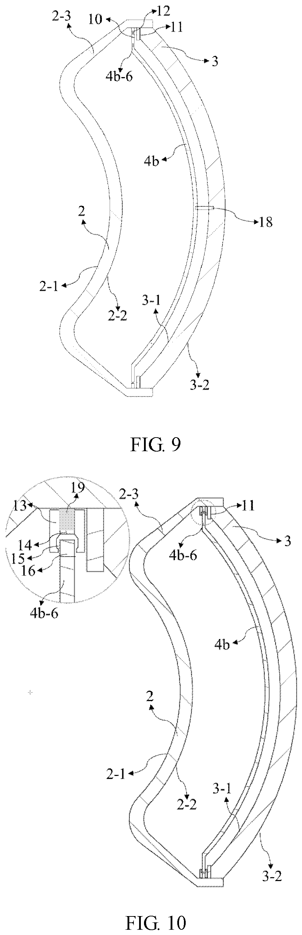

As shown in FIG 9, FIG 9 is a schematic diagram of a rotating structure of the linear display. One side of a center of the linear display 4b facing away from the light-emitting pixel 4b-1 is provided with a rotating small hole, with a size generally ranging from 0.2 mm to 1 mm. A thin shaft 18 is fixed in a center of the concave partial reflector 3, and a diameter of the thin shaft 18 matches the small hole to limit radial movement of the linear display 4b. The linear display 4b can rotate around the shaft. A rotating bracket 21 may be arranged in front of the concave partial reflector 3, and the thin shaft 18 may be fixed in the center thereof. The rotating bracket may be a lens or a thin metal strip made of a transparent material. Due to a short length of a central shaft, a small gap between the thin shaft 18 and the small hole may cause axial swing of the linear display 4b. The swing may be limited by magnetic confinement. An inner magnetic ring 10 is fixed to an outer side of the rotating ring 4b-6, the inner magnetic ring 10 rotates together with the rotating ring 4b-6, and an outer magnetic ring 12 fixed to the glass frame is arranged on an outer side of the inner magnetic ring 10. The inner magnetic ring 10 and the outer magnetic ring 12 form concentric circles and have an air gap therebetween to prevent friction. When magnetization directions of the inner magnetic ring 10 and the outer magnetic ring 12 are opposite to each other, magnetic confinement may be formed, and there is a force to maintain them in a same plane. When a pulse motor is used, since the magnets on the rotating ring are all arranged in a same direction, the collaboration with the outer magnetic ring 12 can also form a stable structure. Therefore, the inner magnetic ring 10 may be omitted in this case. A driving coil or PCB is arranged on a left side or right side of the rotating ring 4b-6, which is fixed to the glass frame, and the driving coil or PCB can drive the rotating ring 4b-6 to rotate and can wirelessly supply power to the linear display 4b.

FIG 10 is a schematic diagram of another rotating structure. A sliding ring 16 sleeves an outer ring of the rotating ring 4b-6, which is featured with low friction resistance and is generally made of metal, Teflon, or the like. Above the corresponding position, a bound magnetic ring 19, a magnetic conductive ring 13, a wear-resisting ring 14, and the like are fixed to the glass frame. There is a lubrication gap 15 between the wear-resisting ring 14 and the sliding ring 16. This structure is based on a principle that the bound magnetic ring 19 transmits a magnetic field around the lubrication gap 15 through the magnetic conductive ring 13, and magnetic fluid is flushed into the lubrication gap 15 to form liquid lubrication. At the same time, due to magnetic confinement, the magnetic fluid cannot leak out, forming a stable sealing structure.

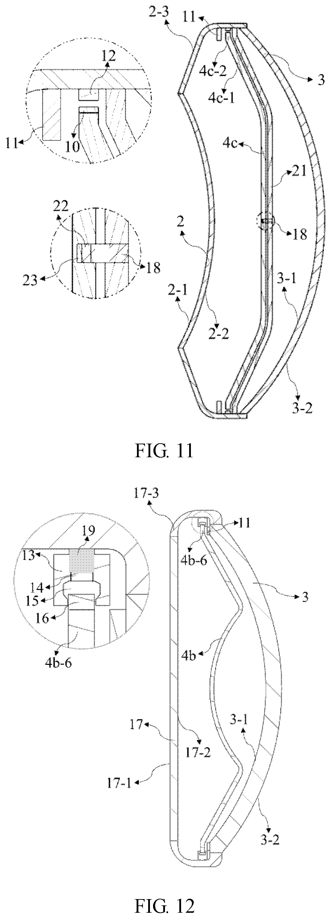

As shown in FIG 11, one side of a center of the flat microdisplay 4c facing away from the light-emitting pixel 4b-1 is provided with a rotating small hole, with a size generally ranging from 0.2 mm to 1 mm. A rotating bracket 21 is placed on one side close to the concave partial reflector 3. A thin shaft 18 is fixed in a center of the rotating bracket 21, and a diameter of the thin shaft 18 matches the small hole to limit radial movement of the flat microdisplay 4c. The flat microdisplay 4c can rotate around the shaft. Due to a short length of a central shaft, a small gap between the thin shaft 18 and the small hole may cause axial swing of the flat microdisplay 4c. The swing may be limited by magnetic confinement. A top end of the flat microdisplay 4c is connected to a flat microdisplay extension end 4c-1, and the flat microdisplay extension 4c-1 is fixedly connected to a flat microdisplay rotating ring 4c-2. An inner magnetic ring 10 is fixed to an outer side of the flat microdisplay rotating ring 4c-2, the inner magnetic ring 10 rotates together with the flat microdisplay rotating ring 4c-2, and an outer magnetic ring 12 fixed to the glass frame is arranged on an outer side of the inner magnetic ring 10. The inner magnetic ring 10 and the outer magnetic ring 12 form concentric circles and have an air gap therebetween to prevent friction. When magnetization directions of the inner magnetic ring 10 and the outer magnetic ring 12 are opposite to each other, magnetic confinement may be formed, and there is a force to maintain them in a same plane. When a pulse motor is used, since the magnets on the rotating ring are all arranged in a same direction, the collaboration with the outer magnetic ring 12 can also form a stable structure. Therefore, the inner magnetic ring 10 may be omitted in this case.

A central permanent magnet 23 may be placed on one side of the thin shaft 18 close to the flat microdisplay 4c. Generally, a certain central gap 22 may exist between the central permanent magnet 23 and the thin shaft 18. A lubrication effect may be achieved by filling the central gap 22 with magnetic fluid.

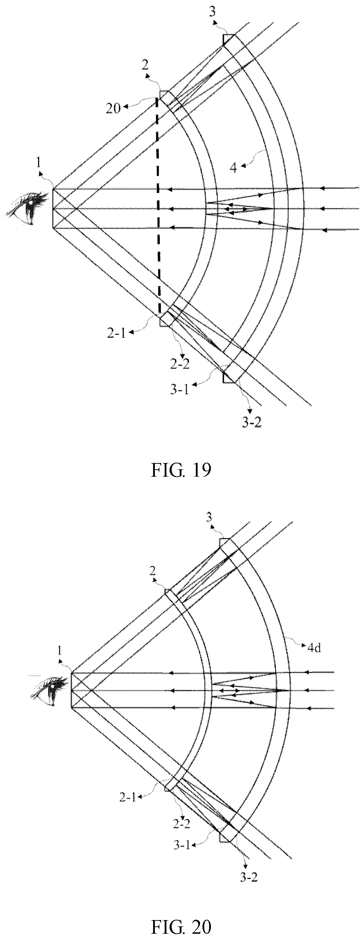

As shown in FIG 12, FIG 12 shows a rotation method of the planar partial reflector 17. A sliding ring 16 sleeves an outer ring of the rotating ring 4b-6, which is featured with low friction resistance and is generally made of metal, Teflon, or the like. Above corresponding positions, a bound magnetic ring 19, a magnetic conductive ring 13, a wear-resisting ring 14, and the like are fixed to the glass frame. There is a lubrication gap 15 between the wear-resisting ring 14 and the sliding ring 16. This structure is based on a principle that the bound magnetic ring 19 transmits a magnetic field around the lubrication gap 15 through the magnetic conductive ring 13, and magnetic fluid is flushed into the lubrication gap 15 to form liquid lubrication. At the same time, due to magnetic confinement, the magnetic fluid cannot leak out, forming a stable sealing structure. Similar to the structure in FIG 20, a manner of adding a rotating bracket 21 with a center rotating around the shaft may also be adopted.

The closed space formed by the convex partial reflector 2, the concave partial reflector 3, and the glass frame may be filled with nitrogen or inert gas to prevent oxidation and prolong the service life, and may also be vacuumized to further reduce the rotational resistance.

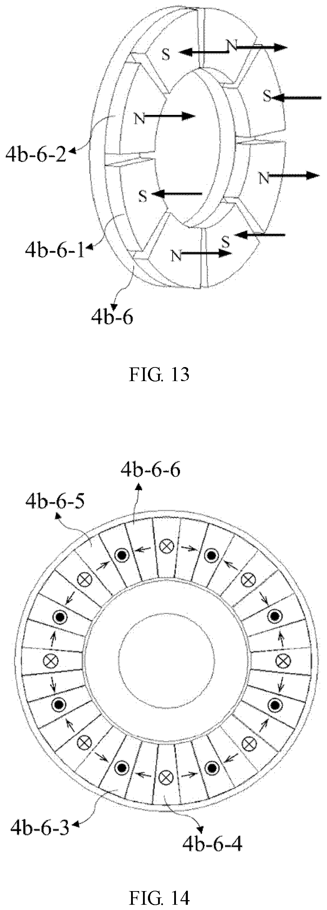

As shown in FIG 13, permanent magnets on the rotating ring 4b-6 or the rotating ring 4c-2 of the flat microdisplay may be arranged alternately with NS. As shown in FIG 14, the permanent magnets on the rotating ring 4b-6 or the rotating ring 4c-2 of the flat microdisplay may alternatively be arranged in a Halbach array. Motors using the above two arrangements generally fall within a category of brushless DC motors. A driving and power supply coil or PCB 11 is placed at a corresponding position on the left side or right side of the rotating ring, which can drive the rotating ring to rotate through power and supply power to the microdisplay at the same time.

Through the above design, the optical system described in this implementation can reduce the overall thickness of the glasses and increase the exit pupil diameter, so that the user's wearing is more comfortable and more beautiful. Through two reflections, a size of the microdisplay is optically increased, so that manufacturing difficulty of the microdisplay is reduced, the precision required for the rotation is reduced, and a higher resolution is supported.

In this implementation, the overall structure of the optical system is thinner by folding the optical path, which increases comfort. A low-friction and stable rotation scheme is proposed at the same time.

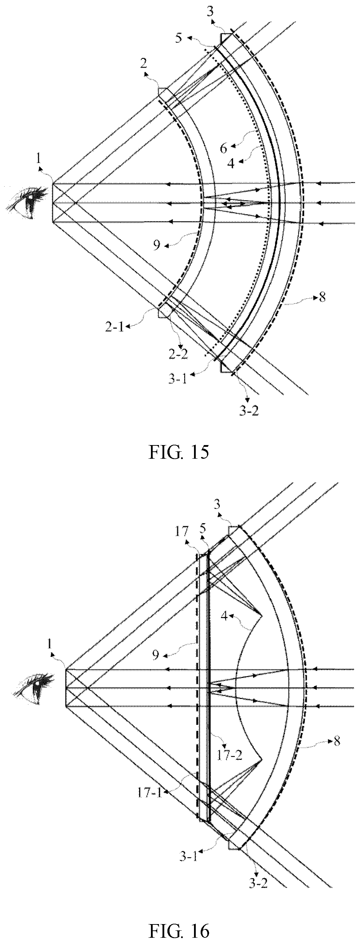

As shown in FIG 15 and FIG 16, in this implementation, a phase retardation wave plate, a polarization element, and a dynamic light-shielding device are added. The phase retardation wave plate generally includes a quarter-wave plate and a half-wave plate. The polarization element mainly includes absorbing polarizers, wire grid polarizers, dielectric film polarizers, and the like. Combined use of the phase retardation wave plate and the polarization element can improve utilization of light energy and reduce interference of the stray light.

A phase retardation wave plate 5 is added between the convex partial reflector 2 or the planar partial reflector 17 and the microdisplay 4, or a phase retardation wave plate 5 is added between the microdisplay 4 and the concave partial reflector 3.

A phase retardation wave plate 5 may also be placed between the microdisplay 4 and the concave partial reflector 3, and the phase retardation wave plate 5 may be attached to the concave reflector 3. A phase retardation wave plate 5 may also be inserted between the microdisplay 4 and the convex partial reflector 2 or the planar partial reflector 17, and may be attached to the convex partial reflector 2 or the planar partial reflector 17.

An outer polarization element 8 may be attached to the concave partial reflector 3, and an inner polarization element 9 may also be attached to the convex partial reflector 2.

A front dynamic light-shielding layer 20 is placed on one side of the convex partial reflector 2 or the planar partial reflector 17.

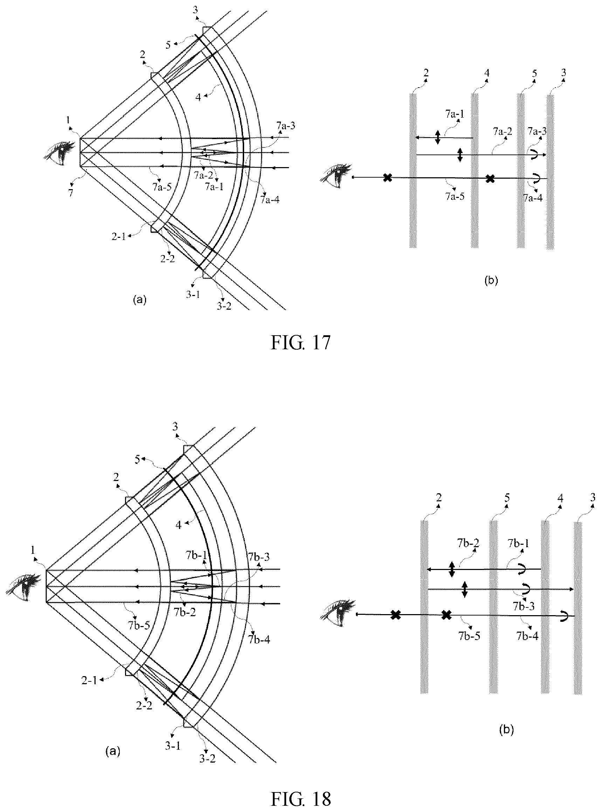

FIG 17 is a schematic diagram of an optical path when the phase retardation wave plate 5 is located between the concave partial reflector 3 and the microdisplay 4. The microdisplay 4 emits first p-type linearly polarized light 7a-1. The convex partial reflector 2 is coated with a film layer that reflects p light and transmits s light. The reflected light is still the second p-type linearly polarized light 7a-2, which becomes first circularly or elliptically polarized light 7a-3 after passing through the phase retardation wave plate 5. After being reflected by the concave partial reflector 3, the light is still second circularly or elliptically polarized light 7a-4. The light passes through the phase retardation wave plate 5 again and becomes first s-type linearly polarized light 7a-5. The light can enter the human eye through the convex partial reflector 2 to the greatest extent, and prevent the interference of the stray light at the same time.

FIG 18 is a schematic diagram of an optical path when the phase retardation wave plate 5 is located between the convex partial reflector 2 and the microdisplay 4. The microdisplay 4 emits circularly or elliptically polarized light 7b-1, which passes through the phase retardation wave plate 5 and becomes third p-type linearly polarized light 7b-2. The convex partial reflector 2 is coated with a film layer that reflects p light and transmits s light. The reflected light is still fourth p-type linearly polarized light 7b-3, which becomes fourth circularly or elliptically polarized light 7b-3 after passing through the phase retardation wave plate 5. After being reflected by the concave partial reflector 3, the light is still fifth circularly or elliptically polarized light 7b-4. The light passes through the phase retardation wave plate 5 again and becomes second s-type linearly polarized light 7b-5. The light can enter the human eye through the convex partial reflector 2 to the greatest extent, and prevent the interference of the stray light at the same time.

The outer polarization element 8 and the inner polarization element 9 may be added on two sides of the system, and the stray light caused by the ambient light may be eliminated by adjusting a polarization direction to achieve a better effect. As shown in FIG 19, a front dynamic light-shielding device 20 may be placed on one side of the convex partial reflector 2 or the planar partial reflector 17 close to the human eye, whose function is to block the light emitted by the microdisplay 4 and directly passing through the convex partial reflector 2 or the planar partial reflector 17. It is composed of grayscale pixels. When the microdisplay 4 scans and emits light, the dynamic light-shielding layer 20 becomes black at a position where the light emitted by the microdisplay directly enters the human eye through the convex partial reflector 2 or the planar partial reflector 17, and may be white at other positions, so as to block the stray light that directly enters the human eye and improve contrast of the image. The dynamic light-shielding device 20 may alternatively be placed between the microdisplay 4 and the convex partial reflector 2. A pixel size thereof is required to be smaller than the human pupil in at least one direction. It should be emphasized that surface types of the phase retardation wave plate 5, the outer polarization element 8, the inner polarization element 9, and the dynamic light-shielding layer 20 are not limited, which may be curved or planar.

In this implementation, the addition of the phase retardation wave plate, the polarization element, and the dynamic light-shielding device can improve utilization of light energy, improve brightness, and reduce interference of the stray light at the same time.

Specific Implementation 2: This implementation is described with reference to FIG 20 to FIG 24. The structure and the rotation method of the microdisplay 4 in this implementation are similar to those in Specific Implementation 1. Details thereof are not described herein.

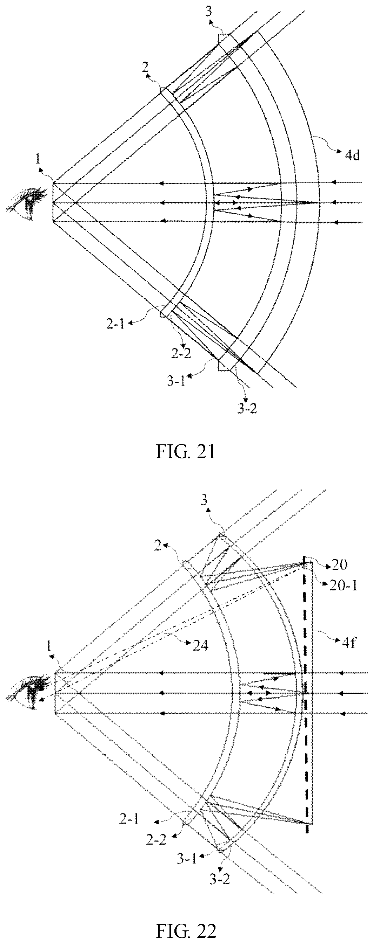

As shown in FIG 20, a short-focus near-eye display system is mainly composed of an outer microdisplay 4d or an outer flat microdisplay 4f, a convex partial reflector 2, and a concave partial reflector 3. The outer microdisplay 4d or the outer flat microdisplay 4f is on an outer side of the concave partial reflector 3 away from the human eye, and emits light towards the eye. As shown in FIG 20, the position thereof may fit an outer side surface 3-2 of the concave partial reflector. As shown in FIG 21 and FIG 22, there may be a certain gap, for example, 3 mm. The outer microdisplay 4d or the outer flat microdisplay 4f may be a transparent display or a rotating linear display, or may be a non-transparent display for virtual reality use. The partial reflector closer to the eye is the convex reflector, and the partial reflector farther from the eye is the concave reflector. The outer microdisplay 4d or the outer flat microdisplay 4f emits light towards the human eye. The light passes through the concave partial reflector 3, and then is reflected by one surface of the convex partial reflector 2, i.e., the inner side surface 2-1 or the outer side surface 2-2 of the convex partial reflector. Then, the light is reflected by the concave partial reflector 3. Since the convex partial reflector 2 can transmit light at the same time, the reflected light passes through the convex partial reflector 2 and then reaches the pupil position 1 for observation by the human eye. After the light emitted by the outer microdisplay 4d or the outer flat microdisplay 4f is reflected by the convex partial reflector 2 and the concave partial reflector 3, an effect of zooming in and zooming out is achieved.

Preferably, in order to achieve uniformity of clarity of a displayed image, the convex partial reflector 2, the concave partial reflector 3, and the outer microdisplay 4 are distributed on concentric spherical surfaces, and the spherical center is located at the center of the pupil position 1. As shown in FIG 22, in order to reduce manufacturing difficulty of the outer microdisplay 4d, when the outer flat microdisplay 4f is used, the overall structure of the optical path does not have spherical symmetry. In order to achieve asymmetric correction, preferably, at least one of the convex partial reflector 2 and the concave partial reflector 3 is aspherical. A dynamic light-shielding device 20 may be added in front of the outer flat microdisplay 4f. A front dynamic light-shielding device black-state pixel 20-1 is adjusted on a path of light of the outer flat microdisplay 4f directly entering the human eye, stray light 24 that directly enters the human eye is reduced.

Since the human eye has a zoom adjustment function, a certain degree of movement of each component or deformation of a surface shape of each component is allowed. An additional function of this movement is to adapt to a degree of myopia and realize dynamic zoom. As an example, optical parameters for one symmetrical design are listed in the following table.

| Surface | Radius of curvature (mm) | Thickness (mm) | Material |
|---|---|---|---|
| Virtual image | OC) | -2000 | - |
| Pupil exit position | OC) | 20.13 | Air |
| 2-1 | -20.13 | 1 | PMMA |
| 2-2 | -21.13 | 8.87 | Coated reflective film, air |
| 3-1 | -30 | 2 | Coated reflective film, PMMA |
| 3-2 | -32 | 3 | Air |
| 4 | 35 | - | - |

If one surface of the convex partial reflector 2 is coated with a reflective film to participate in generation of a virtual image, the curvature of the other surface may be changed as a surface for myopia correction to suit the degree of the user. Two surfaces of the concave reflector may be treated in a same manner to adjust the degree, so that the ambient light can clearly reach the human eye.

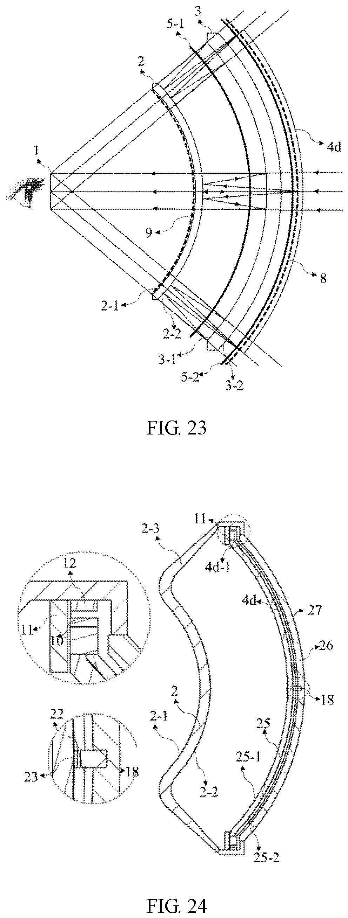

As shown in FIG 23, for a case where the outer microdisplay 4d or the outer flat microdisplay 4f is located outside the concave partial reflector 3 in this embodiment, the outer polarization element 8 may be placed in front of the outer microdisplay 4d or the outer flat microdisplay 4f, followed by an outer phase retardation wave plate 5-2. At the same time, an inner phase retardation wave plate 5-1 is added between the convex partial reflector 2 and the concave partial reflector 3. Each phase retardation wave plate may be attached to surfaces of the convex partial reflector 2 and the concave partial reflector 3. The phase retardation wave plate, the polarization element, and the dynamic light-shielding device are all for achieving a better effect, but are not necessary devices.

Design parameters with a virtual image distance of 2 mm, ambient light afocal power, and suitable for non-moia degrees are listed in the following table.

| Surface | Radius of curvature (mm) | Thickness (mm) | Material | Aspheric coefficient r² | Aspheric coefficient r⁴ | Aspheric coefficient r⁶ | Aspheric coefficient r⁸ |
|---|---|---|---|---|---|---|---|
| Virtual image | ∞ | -2000 | - | - | - | - | - |
| Pupil exit position | ∞ | 22 | Air | - | - | - | - |
| 2-1 even-order aspheric surface | 114.297 | 1.5 | PMMA | 3.876E-2 | 5.772E-5 | 4.3843E-8 | 4.873E-12 |
| 2-2 even-order aspheric surface | -80.556 | 6.5 | Reflective film/ air | 2.12E-2 | 1.179E-5 | 3.85E-8 | 7.035E-11 |
| 3-1 even-order aspheric surface | -70.827 | 1.5 | Reflective film PMMA | 1.689E-2 | 4.49E-6 | 1.098E-8 | 9.426E-12 |
| 3-2 even-order aspheric surface | -136.39 | 3.2 | Air | 2.487E-2 | 1.029E-5 | 1.706E-8 | 2.426E-11 |
| 4 | -27.385 | - | - | - | - | | |

As shown in FIG 24, in order to improve utilization of light energy and reduce interference of the stray light, a stripped concave reflector 25 may be used. A front surface 25-2 or a rear surface 25-2 of the stripped concave reflector is coated with a film layer with certain reflectivity, and a width of the film layer generally ranges from 1 mm to 10 mm. The stripped concave reflector 25 is fixedly connected to and rotates with the outer microdisplay 4d. An outer transparent protective shell 26 is placed on an outer side of the outer microdisplay 4d, which is fixedly connected to the glass frame. A small rotating hole is provided on a display screen bracket 27 of the outer microdisplay 4d, having a size generally ranging from 0.2 mm to 5 mm. A thin shaft 18 is fixed in a center of the outer transparent protective shell 26, and a diameter of the thin shaft 18 matches the small hole to limit radial movement of the outer microdisplay 4d. The outer microdisplay 4d can rotate around the shaft. Due to a short length of a central shaft, a small gap between the thin shaft 18 and the small hole may cause axial swing of the outer microdisplay 4d. The swing may be limited by magnetic confinement. An inner magnetic ring 10 is fixed to an outer side of the outer microdisplay rotating ring 4d-1, the inner magnetic ring 10 rotates together with the outer microdisplay rotating ring 4d-1, and an outer magnetic ring 12 fixed to the glass frame is arranged on an outer side of the inner magnetic ring 10. The inner magnetic ring 10 and the outer magnetic ring 12 form concentric circles and have an air gap therebetween to prevent friction. When magnetization directions of the inner magnetic ring 10 and the outer magnetic ring 12 are opposite to each other, magnetic confinement may be formed, and there is a force to maintain them in a same plane. When a pulse motor is used, since the magnets on the rotating ring are all arranged in a same direction, the collaboration with the outer magnetic ring 12 can also form a stable structure. Therefore, the inner magnetic ring 10 may be omitted in this case. A driving coil or PCB is arranged on a left side or right side of the outer microdisplay rotating ring 4d-1, which is fixed to the glass frame, and the driving coil or PCB can drive the outer microdisplay rotating ring 4d-1 to rotate and can wirelessly supply power to the linear display 4b. A central permanent magnet 23 may be placed on one side of the thin shaft 18 close to the outer microdisplay 4d. Generally, a certain central gap 22 may exist between the central permanent magnet 23 and the thin shaft 18. A lubrication effect may be achieved by filling the central gap 22 with magnetic fluid.

The above manner in which the stripped reflector is used to rotate simultaneously with the microdisplay is also applicable to Implementation 1.

This implementation has an advantage that the light is not required to pass through the outer microdisplay 4d or the outer flat microdisplay 4f multiple times. When the microdisplay has certain absorption, light energy losses caused by multiple passes through the outer microdisplay 4d or the outer flat microdisplay 4f can be prevented. At the same time, a phase retardation wave plate and a polarization element may be placed between the outer microdisplay 4d or the outer flat microdisplay 4f and the concave partial reflector 3, thereby increasing a degree of freedom.

The technical features in the above embodiments may be randomly combined. For concise description, not all possible combinations of the technical features in the above embodiments are described. However, all the combinations of the technical features are to be considered as falling within the scope described in this specification provided that they do not conflict with each other.

The above embodiments only describe several implementations of the present disclosure, and their description is specific and detailed, but cannot therefore be understood as a limitation on the patent scope of the invention. It should be noted that those of ordinary skill in the art may further make variations and improvements without departing from the conception of the present disclosure, and these all fall within the protection scope of the present disclosure. Therefore, the patent protection scope of the present disclosure should be subject to the appended claims.

## Claims

1. A short-focus near-eye display system, wherein the system comprises a microdisplay (4), a convex partial reflector (2) or a planar partial reflector (17), and a concave partial reflector (3),
wherein the microdisplay (4) is located between the convex partial reflector (2) and the concave partial reflector (3) or the microdisplay (4) is located between the planar partial reflector (17) and the concave partial reflector (3), the convex partial reflector (2) or the planar partial reflector (17) is closer to a pupil position (1), and the concave partial reflector (3) is farther from the pupil position (1); the microdisplay (4) is configured as a transparent display or a rotating linear display and emits light towards the pupil position (1), the emitted light is first reflected by the convex partial reflector (2) or the planar partial reflector (17), the reflected light is reflected by the concave partial reflector (3), and the reflected light passes through the convex partial reflector (2) or the planar partial reflector (17) and reaches the pupil position (1) to realize functions of zooming in and zooming out; and surface types and relative positions of the convex partial reflector (2), the concave partial reflector (3), and the microdisplay (4) are configured to suit a degree of myopia of a user, and the convex partial reflector (2) and the concave partial reflector (3) are configured to transmit part of the light, so that ambient light reaches a human eye clearly at the same time.

2. The short-focus near-eye display system according to claim 1, wherein a phase retardation wave plate or a polarization element is arbitrarily arranged among the pupil position (1), the convex partial reflector (2) or the planar partial reflector (17), the concave partial reflector (3), and the microdisplay (4), to improve light energy utilization and reduce stray light.

3. The short-focus near-eye display system according to claim 1, wherein a surface of the convex partial reflector (2) is provided with an optical film layer capable of reflecting p-type linearly polarized light and transmitting s-type linearly polarized light, and a surface of the concave partial reflector (3) is coated with an optical film layer which has the highest reflectivity for a light-emitting wavelength of a pixel of the microdisplay (4) and has the highest transmittance for wavelengths other than the light-emitting wavelength of the microdisplay (4).

4. The short-focus near-eye display system according to claim 1, wherein the linear display is formed by splicing a plurality of rectilinear microdisplay units (4b-3), a non-display region (4b-4) is provided between adjacent rectilinear display units (4b-3), and a display overlapping region (4b-5) is reserved at a position where the rectilinear display units (4b-3) in two adjacent circles are spliced, to compensate for an assembly error.

5. The short-focus near-eye display system according to claim 1, wherein a rotating ring (4b-6) is connected to an edge of the linear display, a thin shaft (18) is fixed in a center of the partial reflector (3) to limit radial movement of the linear display (4b), and the linear display (4b) rotates about the thin shaft;
an inner magnetic ring (10) is fixed to an outer side of the rotating ring (4b-6), and an outer magnetic ring (12) fixed to a glass frame is arranged on an outer side of the inner magnetic ring (10), the inner magnetic ring (10) and the outer magnetic ring (12) forming concentric circles and having an air gap therebetween to prevent friction and form magnetic confinement; and
a driving coil or PCB (11) is arranged on a glass frame corresponding to a left side or right side of the rotating ring (4b-6), the driving coil or PCB (11) being configured to drive the rotating ring (4b-6) to rotate and wirelessly supply power to the linear display (4b).

6. The short-focus near-eye display system according to claim 1, wherein a sliding ring (16) sleeves an outer ring of a linear display rotating ring (4b-6); a bound magnetic ring (19), a magnetic conductive ring (13), and a wear-resisting ring (14) are fixed at corresponding positions of a glass frame above the sliding ring (16); a lubrication gap (15) is formed between the wear-resisting ring (14) and the sliding ring (16); the bound magnetic ring (19) transmits a magnetic field around the lubrication gap (15) through the magnetic conductive ring (13); and magnetic fluid is provided and flushed into the lubrication gap (15) to form a stable sealing structure for liquid lubrication.

7. The short-focus near-eye display system according to claim 1, wherein the convex partial reflector (2), the concave partial reflector (3), and the glass frame form a closed space filled with nitrogen or inert gas, or vacuumized to prevent oxidation of internal components and reduce rotational resistance.

8. The short-focus near-eye display system according to any one of claims 1 to 7, wherein the concave partial reflector (3) is a stripped concave reflector and rotates synchronously with the microdisplay (4).

9. A short-focus near-eye display optical system, wherein the system comprises a microdisplay (4), a convex partial reflector (2), and a concave partial reflector (3); wherein
the microdisplay (4) is configured as a rotating linear display or a transparent display and emit light towards a pupil position (1), and when the microdisplay (4) is configured as the rotating linear display, a transparent protective shell (26) is configured on an outer side thereof;
the convex partial reflector (2) and the concave partial reflector (3) are sequentially configured between the pupil position (1) and the microdisplay (4);
the light emitted by the microdisplay (4) passes through the concave partial reflector (3) and is reflected by the convex partial reflector (2), and the light is then reflected by the concave partial reflector (3), passes through the convex partial reflector (2), and then reaches the pupil position (1), to achieve an effect of zooming in and zooming out an image of the microdisplay (4); and
surface types and relative positions of the convex partial reflector (2), the concave partial reflector (3), and the microdisplay (4) are configured to suit a degree of myopia of a user, and the convex partial reflector (2) and the concave partial reflector (3) are configured to transmit part of the light, so that ambient light reaches a human eye clearly at the same time.

10. The short-focus near-eye display optical system according to claim 9, wherein a phase retardation wave plate or a polarization element is arbitrarily arranged among the pupil position (1), the convex partial reflector (2), the concave partial reflector (3), and the microdisplay (4), to improve light energy utilization and reduce stray light.

11. The short-focus near-eye display optical system according to claim 9, wherein the concave partial reflector (3) is a stripped concave reflector (25), the stripped concave reflector (25) being connected to the microdisplay (4d) located at an outer side thereof and rotating together with the microdisplay (4d).
